# EUROPEAN PATENT APPLICATION

(11) **EP 2 640 154 A1**
(43) Date of publication of application: **18.09.2013**
(21) Application number: 13158943.4
(22) Date of filing: 13.03.2013
(51) Int. Cl.: H04W 76/02, H04W 8/00

(54) **Method of enabling proximity based connectivity between mobile devices using different operating systems**

(30) Priority: 16.03.2012 US 201213422409
(71) Applicant: RapidBlue Solutions Oy, 00100 Helsinki (FI)
(72) Inventor: Hohteri, Harri, 00180 Helsinki (FI); Weigh, Gavin, 00180 Helsinki (FI)
(74) Representative: Papula Oy

(57) **Abstract**

A method and system for enabling cross-platform connectivity and operable communication between two portable communication devices, operating through different operating systems, operably connects the two devices to a service infrastructure through a network. A unique identifier of the first device is retrieved and communicated to the service. Bluetooth or WLAN operation of the two devices is enabled. The second device detects any other device in proximity, within the network, and delivers identifying information of the detected devices to the service. If the identifying information corresponds to the identifier of the first device registered with the service, the service sends a push notification message to a push notification service corresponding to the first device. The push notification service sends an alert to the first device notifying the first device that it has been detected. Connectivity and operable communication between the two devices is enabled.

## Description

### TECHNICAL FIELD

The present disclosure generally relates to methods of enabling proximity based connectivity between portable communication devices, and more specifically, to methods of enabling connectivity between mobile devices operating through different operating systems. Further, aspects of the disclosure are also directed to software products recorded on machine-readable data storage media, and such software products are executable upon computing hardware of portable communication devices, to implement the methods of the disclosure.

### BACKGROUND

Portable communication devices, within the scope of the disclosure, are construed as devices which are portable, and which are capable of supporting wireless communication. Typical examples of portable communication devices include, although are not limited to, mobile telephones, cellular phones, wireless-enabled tablet computers, iPhone^{™}, iPods^{™}, Android^{™} phones, Symbian^{™} phones, personal digital assistants ("PDA's") and other such similar devices

Currently, portable communication devices, including smart phones, for example, the iPhone^{™} from Apple Inc., Nokia's Symbian^{™} and Windows Mobile^{™} phones, Google's Android^{™} phone and Linux phones, are operable through different operating systems, to execute different functions. A major predominant problem is the incompatibility between smart phones operating through different operating systems. When operating through different operating systems, these smart phones are unable to detect each other, or communicate with each other. For example, Apple's iPhone works on iOS (previously known as iPhone OS), which is a mobile operating system developed by Apple Inc. iOS also supports other devices from Apple, including the iPod Touch and iPad. By design, Apple has prevented its iPhones from discovering other mobile phones in its proximity except iPhones. Furthermore, iOS is not licensed by Apple for installation on non-Apple hardware. Effectively, the iPhones cannot detect mobile devices working on operating systems different from iOS. As an example, an Android phone spatially located proximal to an iPhone, is normally unable to communicate with the iPhone through a communication protocol such as Bluetooth^{™}, and vice versa, as the Android phones work on Linux-based operating systems. This is a major problem which prevents users of different smart phones from interconnecting with each other, through Bluetooth technology. As a typical example, if users of different smart phones are willing to arrange a multiplayer online gaming or to share data through Bluetooth technology, it is eventually restricted due to the incompatibility between the different operating systems through which they are operating.

Many service discovery protocols are available in the mobile communication technology, which allow mobile devices to detect other mobile devices automatically on a computer network, and located in their proximity. An example is the Bluetooth discovery service, which, working on the well-known Bluetooth technology operating at about 2.4 GHz, enables devices to communicate wirelessly and allows data transfer between the devices, when the device are within a specific range, specifically about 10 meters to 100 meters. However, the problem of cross-platform communication, detection and data exchange between mobile devices operating through different operating systems, still persists, and the current service discovery protocols are unsuccessful in enabling such communication between the devices.

Therefore, there exists a need for a system and a method for enabling cross-platform communication between portable communication devices having different operating systems installed therein.

### SUMMARY

The present disclosure provides a method and a system for enabling cross-platform connectivity and operable communication between portable communication devices having different operating systems installed therein, and located in proximity to each other, within a communication network.

In one aspect, the present embodiment provides a method for enabling cross-platform connectivity and operable communication between a first and a second portable communication device. In use, the two devices are located spatially proximal to each other, and are configured to operate through different operating systems installed in their hardware. The method includes using an application within the first device, to retrieve a unique identifier corresponding to the first device, and communicate the unique identifier to a service infrastructure. The service infrastructure allows detection of communication devices within a network. The first device is connected to the service infrastructure to communicate operably with it, through the communication network. As the unique identifier is communicated, it is stored by service infrastructure, within its database. Furthermore, the second device is operably connected to the service infrastructure, and is capable of identifying/detecting mobile communication devices in its proximity, through the service infrastructure. Eventually, if the second device detects any communication device lying spatially proximal to it, the second device conveys the identifying information of the detected device to the service infrastructure. The service infrastructure checks and confirms whether or not the identifying information is stored within the database of the service infrastructure. If the information is already stored, and corresponds to the unique identifier of the first device, the service infrastructure delivers a notification to the first device, thus notifying the first device that it has been detected by the second device. Furthermore, a notification service compatible with the operating system of the first device is used to deliver the notification to the first device.

In another aspect, the present embodiment provides a system for cross-platform connectivity and operable communication between different portable communication devices operating through different operating systems, and lying in proximity to each other. The system includes a first portable communication device operably connected to a service infrastructure. The first device has a software application installed in it, which retrieves a unique identifier of the first device and delivers the identifier to the service infrastructure. A second portable communication device is also operably connected to the service infrastructure. The second device continuously detects any communication devices within its proximity, through the service infrastructure. If any device is detected, the second device delivers the identifying information of the detected device to the service infrastructure. The service infrastructure is configured to check whether or not the identifying information is already stored within its database, and confirms whether or not it corresponds to, or matches with, the unique identifier of the first device. If confirmed, then the service infrastructure delivers a notification to the first device, notifying the first device that it has been detected by the second device.

The present embodiment substantially eliminates the problems of cross-platform communication between different communication devices, including smart phones, operating through different operating systems, and enables communication and connectivity between such devices.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the invention is not limited to specific methods and instrumentalities disclosed herein. Moreover, those in the art will understand that the drawings are not to scale. Wherever possible, like elements have been indicated by identical numbers.

Fig.1 illustrates an exemplary system and method of establishing cross-platform connectivity and operable communication between different portable communication devices, located spatially proximal to each other, and having different operating systems installed therein, in accordance with aspects of the present disclosure.

Fig. 2 illustrates an exemplary system in accordance with aspects of the present disclosure, for enabling cross-platform communication between different portable devices within a network and thereby providing a push notification service.

Fig. 3 illustrates one embodiment of a method of enabling cross-platform connectivity, and operable communication between the portable communication devices of Fig. 1, in accordance with aspects of the present disclosure.

Fig. 4 illustrates one embodiment of a system for establishing a secure connection between the push notification service of Fig. 2, and different portable communication devices.

### DETAILED DESCRIPTION OF ILLUSTRATIVE EMBODIMENTS

The following detailed description illustrates embodiments of the disclosure and ways in which it can be implemented. Although the best mode of carrying out the invention has been disclosed, those in the art would recognize that other embodiments for carrying out or practicing the invention are also possible.

Portable communication devices, including mobile devices, cellular phones, iPads, iPhones, personal laptop computers, personal digital assistants (PDA), are predominantly used in the art, for communication and other purposes, and such devices are often equipped with the feature of supporting wireless communication, including the Wireless Local Area Networks (WLAN) and Bluetooth technology etc, through suitable applications/modules installed within the devices. Bluetooth technology facilitates short range wireless communication between such devices. Using short wavelength radio transmission, the Bluetooth technology enables voice and data exchange between the devices. To support the Bluetooth technology, the communication devices, including mobile devices, generally have a Radio Frequency Bluetooth Transceiver that lies at their physical layer, and an adapter which may be in-built, or can be in the form of a card that connects to the device.

Furthermore, different portable communication devices operate through different operating systems installed within them. As an explanatory example, many smart phones are available in contemporary mobile communication technology, including the iPhone^{™} from Apple, Inc., the Symbian^{™} or Windows Mobile^{™} Phone from Nokia, and the Android^{™} phone from Google, Inc. Each of these smart phones has a specific operating system through which it operates. The iPhones from Apple, for example, have an iOS operating system (initially known as iPhoneOS), which is Apple's proprietary mobile operating system. The Android phones work on a Linux-based operating system. Due to restraints from OEMs (original equipment manufacturers), there is typically an incompatibility factor between the different operating systems, which obstructs these communication devices from detecting each other, when mutually coupled in a network. An iPhone can only detect another iPhone, and no other device, within its near-field wireless communication network.

The present disclosure provides an effective method and a system for achieving cross-platform connectivity and an operable communication between different portable communication devices, working on different operating systems, for data exchange and other purposes.

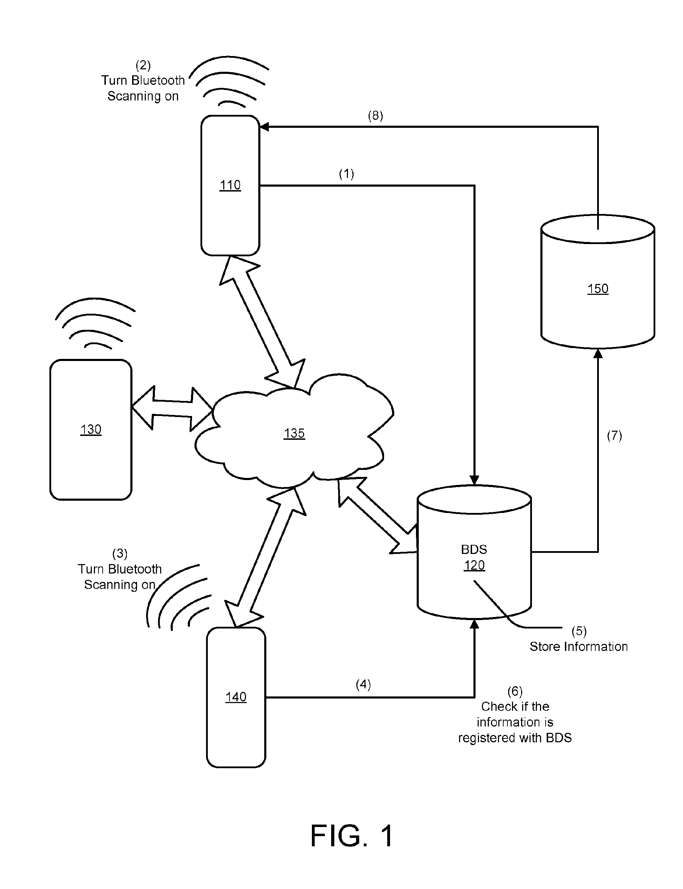

In Fig. 1, there is provided a diagram illustrating different portable communication devices operating through different operating systems, and being disposed communicatively proximal to each other, and further, the way these communication devices interconnect and detect each other, in accordance with an embodiment of the present disclosure. The terms "proximal" "or "spatially located proximal" as used in this disclosure are generally intended to mean and include any distance or distances that support inter-device communication and detection, such as that provided in a WLAN network, or pursuant to the Bluetooth^{™} protocol. In the shown embodiment, an iPhone **110,** a Symbian phone **130,** and an Android phone **140** are spatially located proximal to each other, within a communication network **135.** Hereinafter, the iPhone **110,** the Symbian Phone **130** and the Android phone **140** will be referred to as device **110,** device **130** and device **140,** respectively, for the sake of generalization and maintaining simplicity. Not limiting the scope of the disclosure, any number of portable communication devices, including smart phones, can be present within the communication network, and in proximity to the shown devices. The steps involved in enabling cross-platform connectivity and operably communication between the shown devices will now be explained in detail hereinafter. The device **110,** being an iPhone, operates through Apple's Mobile operating system, i.e., iOS. The device **110** connects to a Bluetooth discovery service **120** (referred to as 'BDS **120'** hereinafter, for simplicity and economy of expression) through the Wireless local area network (WLAN) **135** or any other suitable communication network. BDS **120** is a third party provided service, which registers a unique identifier of device 110 (the identifier can be, but is not limited to, Bluetooth MAC addresses of the device 110). One example of such a service is disclosed in US Provisional Patent Application Serial Number 61/480,000 filed on 28 April 2011by the assignee of the instant application, the disclosure of which is incorporated herein by reference in its entirety. A unique identifier corresponding to the device **110,** is retrieved from the device 110, and is registered with the Bluetooth discovery service **120** at step **(1),** as shown. In one embodiment, the unique identifier can be the device **110**'s Media Access Control Address / Addresses (MAC Address) assigned to its network interface (for example for WLAN and/or Bluetooth) controller, and the Push notification identifier for the device **110,** which is a token issued to a device when it connects with the push notification service for the first time. It will be understood that in some cases, the device 110 can include more than one MAC address, such as one for Bluetooth and another for WLAN. The BDS **120** stores this unique identifier within a database thereof (though not shown). Step **(1)** is a registration process, wherein the device **110** registers itself at the BDS **120.** A similar process, as specified in Step **(1),** applies to the device **130** lying spatially proximal to the device **110** and the device **140.** Specifically, in this embodiment, the device **130** also registers its MAC address with the BDS **120.** Any appropriate method/means known in the technology can be used to retrieve the unique identifier (i.e., MAC address) of these devices. Specifically, the devices 110, 130 can use suitable in-built software applications therein, to retrieve their respective MAC addresses. Further, the devices 110, 130 can also use information pertaining to the communication network **135** through which they connect to the BDS **120,** to retrieve their MAC address. Additionally, the MAC address can also be derived from the connectivity information of any other Wi-FI or wired communication network, through which any of the devices 110, 130 is additionally connected.

All of the three devices **110, 130** and **140,** as shown in Fig. 1, generally support Bluetooth technology, and are equipped with RF transceivers and Bluetooth adapters, to support data transfer and short range wireless communication through use of Bluetooth technology. Additionally, or alternatively to Bluetooth communication, WLAN scanning could be used as well. The WLAN can be active or passive. Active WLAN scanning includes broadcasting IP packets to the connected network, whereas passive WLAN scanning includes listening to the air traffic and detecting devices from the air traffic. When in WLAN scanning, any platform that supports push notifications can be used. Currently, since the devices cannot communicate directly, such as using a Bluetooth channel, any such communications are through a push notification service. Proceeding further, at step **(2),** the Bluetooth scanning or WLAN scanning (in both passive and active mode) application of the devices **110** and **130** is turned on, to enable detection by these devices, of other devices, such as device 140 in communication proximity. At step **(3),** the device **140** activates its Bluetooth scanning mode, and connects with the BDS **120,** through the WLAN network **135,** or any other suitable wireless/wired network. At step **(4),** eventually, as the Bluetooth scanning operation of the device **140** gets turned on at step **(3),** the device 140 detects the devices **110** and **130** lying in its proximity, and sends identifying information corresponding to the devices **110** and **130,** to the BDS **120.** The identifying information can be the devices' MAC address(es), location, or their received signals strength indicator (RSSI) value, or any other suitable unique identifier. The BDS 120 stores the identifying information at step **(5).** At step **(6),** the BDS **120** performs a check whether or not the identifying information received at step **(5),** has been already registered with it. Specifically, at this step, the BDS **120** checks whether or not the unique identifiers (i.e., MAC address) corresponding to the identified devices, i.e., the device **110** and the device **130,** are already registered with it. Proceeding further, at step **(7),** if the unique identifier or MAC address of the device **110** is found to be registered beforehand, which in this example can be by the iOS application corresponding to the device 110, the BDS **120** sends a push notification to a push notification service **150.** At step **(8),** the push notification service **150** sends a notification message to the device **110,** that it has been found by the device **140.** The notification message can be in the form of a text message, a visual alert or an audio alert, sent to the device **110.** Additionally, the notification message can be a silent push notification directed to a target application in the device 110. The target application can be configured to handle the notification message in a predetermined way. An example of a push notification service is the Apple Push Notification Service from Apple®. The iOS application of the device **110,** is then capable of connecting and operably communicating with the device 110 through supported communication methods (e.g. WLAN or cellular data) **140,** after the notification is received. If any further information is required to create the connection between devices 110, 140, this additional information can be transmitted through the BDS 120 until enough information is transmitted to allow direct communication between devices **110** and **140.** The communication can take place for example over Internet Protocol (IP) connectivity over proximity communication networks such as WLAN, BT or over cellular communication channels between devices 110 and 140. Communication can take place directly between the terminals or via proxy/router. A similar procedure, as specified in steps **(7)** and **(8),** applies for the device **130** too. Specifically, if the MAC address of the device **130** is already found to be registered beforehand, at the BDS **120,** an appropriate push notification service, compatible with the operating system of the device **130,** is used to send a push notification to the device **130** that it has been detected by the device **140.** Eventually, the device **130** is capable of operably connecting with device **140,** after the notification is received.

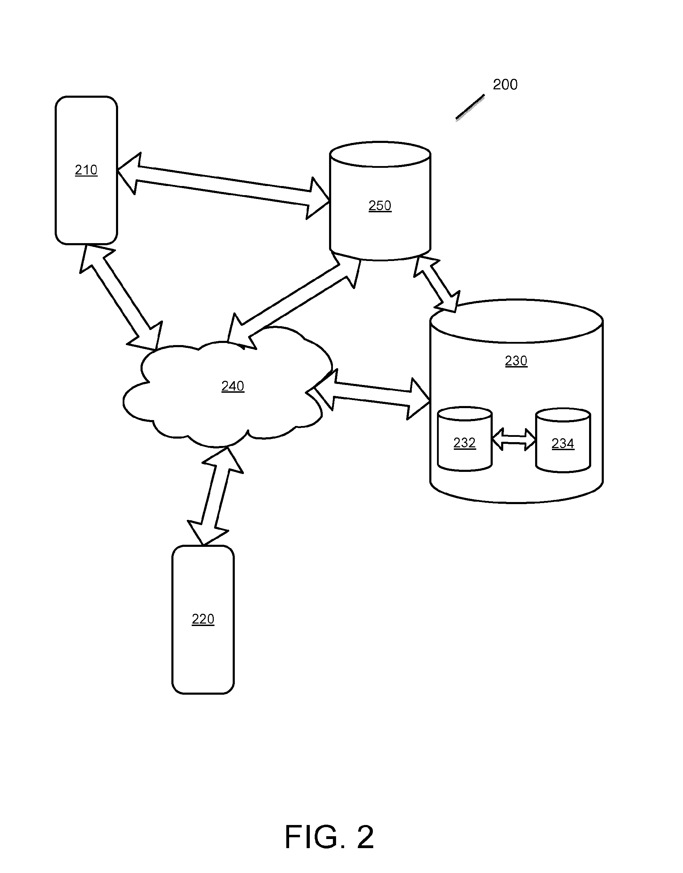

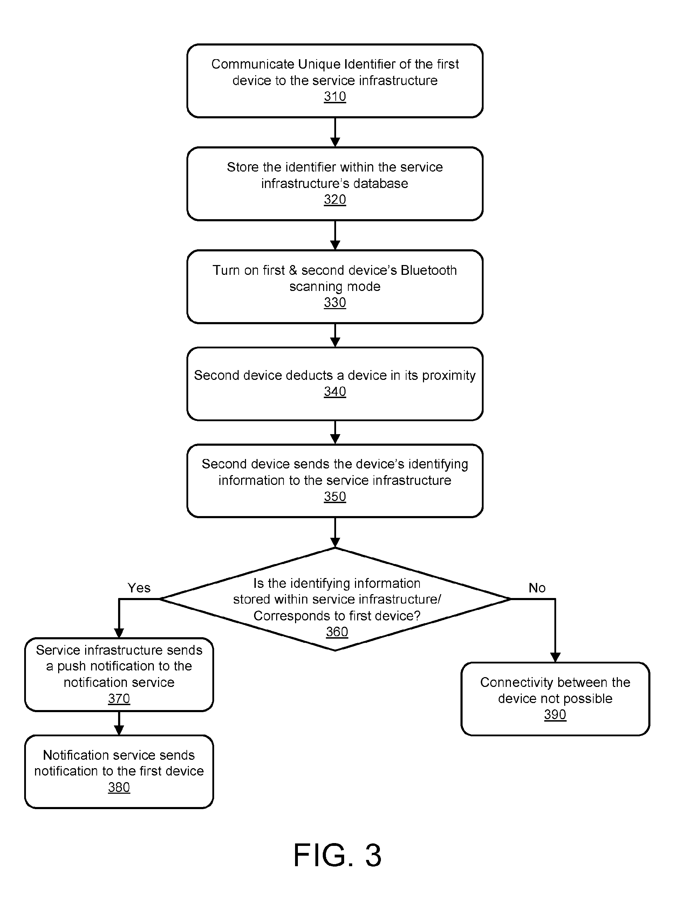

In Fig. 2, there is provided an illustration of one embodiment of a system for enabling cross-platform connectivity and operable communication between different portable communication devices lying spatially proximal to each other, within a communication network. The different devices 210, 220 are operating through different operating systems, and are connected to a service infrastructure 230, which facilitates discovery of one device by the other device(s), in accordance with the present disclosure. In Fig. 3, there is provided a flowchart illustrating one embodiment of a method of enabling cross-platform connectivity and operable communication between different portable communication devices of Fig. 2. Explaining Fig. 2, the system **200** includes a device **210** and a device **220,** operating through different operating systems, and connected to a service infrastructure **230,** through a communication network **240.** The devices **210** and **220** can be any suitable portable communication devices, as explained earlier, including smart phone (including an Android^{™} phone, a Symbian^{™} Phone or an iPhone^{™}), iPad^{™}, tablet computers, etc, and configured to support short range communication and data transfer through Bluetooth technology. Furthermore, the communication network **240** can be any suitable wireless or wired computer network, for enabling short range communication, including Wi-Fi or WLAN, etc. The service infrastructure **230** can be any suitable device discovery service, known in the art, and working on standard service discovery protocols, to enable detection/discovery of devices within a network, such as network 240. In the shown embodiment, the service infrastructure **230** is a service similar to that disclosed in US Provisional Patent Application Serial Number 61/480,000 filed on 28 April 2011, and is configured to discover devices supporting the technology, within the network. The service infrastructure **230** includes a database **232,** and a search crawler **234** coupled to it, for searching within data stored in the database **232.** A push notification service **250** ('service **250'** hereinafter) is connected to the device **210** and the service infrastructure **230,** through the network **240.** Service **250** is configured to provide notifications to the device **210,** based on certain conditions. Those in the art will understand that the service **250** is any suitable known notification service, which supports sending push-based notification to the device **210,** and is compatible with the operating system of the device **210.**

In Fig. 3, there is shown an exemplary method **300** of enabling cross-platform connectivity and operable communication between the device **210** and the device **220** of Fig. 2. Explaining the method **300** in conjunction with Fig. 2, at a step **310,** a unique identifier of the device **210** is retrieved, and an application of the device **210** communicates the unique identifier to the service infrastructure **230.** The unique identifier can be any appropriate identifier for the device **210,** including its media access control address (MAC address), or its push notification identifier, which is generally issued to communication devices when they use the push notification service for the first time, as explained earlier. Furthermore, any appropriate means/module can be used to retrieve the unique identifier of the device **210,** including, using a in-built application of the device **210** for the purpose, or by using the connectivity information of the network **240** through which the device **210** connects to the service infrastructure **230,** or by using information pertaining to any other wireless or wired communication network, that the device **210** may have been connected to.

At a step **320,** the service infrastructure stores the unique identifier within its database **232.** Proceeding further, at step **330,** the Bluetooth scanning operation of the device **210** and the device **220** is turned on. This can also included WLAN scanning in either of the devices and WLAN is connected on both devices. At step **340,** eventually, the device **220** discovers a device 210 in its proximity. Thereafter, at step **350,** the device **220** sends the identifying information corresponding to the discovered device 210, to the service infrastructure **230.** The identifying information can be for example the location, or the Received signal strength Indicator (RSSI) value of the discovered device 210, or the MAC address of the device or combination of. At step **360,** the service infrastructure **230** checks whether or not the identifying information is already stored within its database **232,** and whether or not the identifying information corresponds to the first device **210.** The service infrastructure **230** has different unique identifier values corresponding to the different communication devices, connected commonly through the network **240,** or registered with it earlier. In an embodiment, to perform the check at step **360,** the service infrastructure **230** uses its search crawler **234** to surf through each of the pre-stored entries within its database **232,** and confirms whether or not the identifying information is already registered with it, and corresponds to the device **210.** Further, this may also be done by matching the received identifying information sequentially, with the pre-stored entries within the database **232.** If the identifying information is not present, then, as shown at step **390,** the inter-operation system connection between the devices **210** and **220,** is not possible. Else, at step **370,** if the identifying information is present, i.e., the device **210** is already registered with the services infrastructure **230,** the service infrastructure **230** sends a push notification to the push notification service **250.** Eventually, at step **380,** the service **250** sends a notification to the device **210** that it has been detected by the device **220.** The notification can be in the form of a text message, a visual alert or a verbal alert, or any other suitable mode of intimating to the user of the device **210.** Once the notification is received, connectivity and operable communication between the devices **210** and **220** can be enabled or established, based on the desire of the user of the device **210** to establish short range communication and data exchange. In one aspect, though not shown in Fig. 3, the method **300** can include, after sending the notification to the device **210,** at step **380,** generating a confirmation message and delivers it to the device **210,** asking the user of the device **210** to confirm whether or not an operable connection between the device **210** and the device **220** should be established. If confirmed by the user of the device **210,** the connection between the two devices is established. In one embodiment, the devices can communicate via IP connectivity either directly or via a router or other proxy. The IP connectivity can be established over the BT/WLAN communication channel or via a cellular communication channel, for example. In one embodiment, additional information, such as the other device's IP address can be shared in order to create the connection between the two devices 210, 220 through a communication channel other than the one that is used for proximity discovery. For example, the iOS platform does not enable communication to other devices over Bluetooth. Other examples include using passive WLAN scanning and the devices are not on the same WLAN network or the WLAN network is protected. In these types of cases, it may be necessary to connect the two devices 210, 220 through, for example, a cellular network.

Though the method **300** of Fig. 3 is explained by incorporating only two portable communication devices, it can be used for enabling inter OS communication between more than two devices present in a network, and lying proximal to each other. In those embodiments, the same procedure applies separately for each communication device, retrieving its unique identifier, and a separate notification is being sent to each such device, if it detected by any other device in the communication network.

The method in accordance with the present disclosure, and as illustrated in Fig. 3, is implementable on, and is compatible with, any portable communication device that supports wireless communication and Bluetooth or WLAN technology, and is in operable connection with near-field wireless communication networks, or Bluetooth stations, WLAN stations etc. Furthermore, the disclosure is not limited merely to only smart phones, but works equally well with other portable communication devices, examples of which were set forth before, including iPads, personal laptop computers etc.

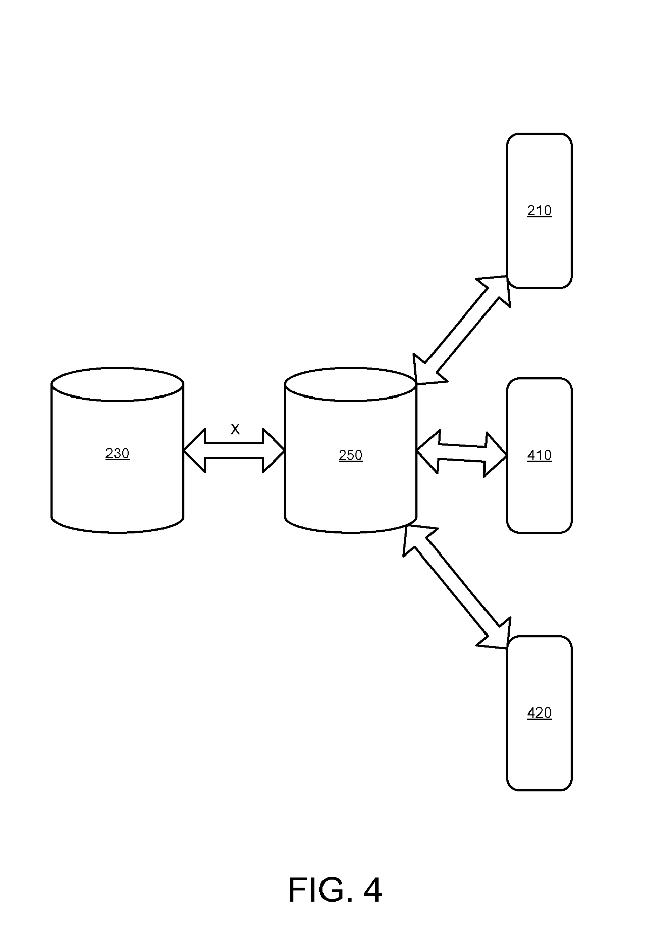

In Fig. 4, there is shown the push notification service **250** ('service **250'** hereinafter) of Fig. 2, and illustrates how the service **250** works, to send notifications to the device **210,** by making a virtual network with the service infrastructure **230,** shown in Fig. 2. Any notification which is routed from the service infrastructure **230** to the device **210,** or any other similar portable communication devices **410** or **420,** as shown, is a short message, which consists of device token and a payload. The device token is used by the service **250** to authenticate the routing of the information. The payload specifies the mode through which the user of the device **210** will be alerted. Multiple points of connection are available on either side of the service **250,** i.e., the side facing the service infrastructure **230** (which acts as the provider), and the side facing the device **210.** These connection points (though not shown), are known as gateways, on the provider's side. The service **250** establishes a secure connection with the service infrastructure **230,** through these gateways. The notification is sent through with the help of this secure connection, through the service **250,** to different applications installed within the devices **210, 410** and **420.** Connection 'X' between the service infrastructure **230** and the service **250,** i.e., between the provider and the push notification service, is established through a peer-to-peer authentication process. Specifically, the service infrastructure **230** (i.e., the provider), initiates a TLS connection, gets a server certification from the service **250,** and validates the certificate. Similarly, the service infrastructure **230** sends its provider certificate to the notification service **250,** which validates it at its own end. Once this process is complete, a legitimate and secure TLS connection is established between the service infrastructure **230** and the service **250.** A similar peer-to-peer authenticate process occurs for establishing a connection between the notification service **250** and the devices **210, 410** and **420.** With each of these devices, the notification service **250** exchanges its server certificate in lieu of the device certificates of the corresponding devices. Once the authentication is complete, a secure Transport Layer Security (TLS) connection is established between the notification service **250** and each of the devices **210, 410** and **420.**

The disclosed embodiments may also include software and computer programs incorporating the process steps and instructions described above. In one embodiment, the programs incorporating the process described herein can be stored as part of a computer program product and executed in one or more computers in one or more of the devices or systems shown in Figs. 1, 2 and 4. The computers can each include computer readable program code means stored on a computer readable storage medium for carrying out and executing the process steps described herein. In one embodiment, the computer readable program code is stored in a memory. In one embodiment, one or more of the devices and systems shown in Figs. 1, 2 and 4 include or are comprised of machine-readable instructions that are executable by a processing device.

The devices and systems shown in Fig. 1, 2 and 4 can be linked together in any conventional manner, including, a modem, wireless connection, hard wire connection, fiber optic or other suitable data link. Information can be made available to each of the systems and devices using a communication protocol typically sent over a communication channel or other suitable communication line or link.

The systems and devices shown in the embodiments disclosed herein are configured to utilize program storage devices embodying machine-readable program source code that is adapted to cause the devices to perform the method steps and processes disclosed herein. The program storage devices incorporating aspects of the disclosed embodiments may be devised, made and used as a component of a machine utilizing optics, magnetic properties and/or electronics to perform the procedures and methods disclosed herein. In alternate embodiments, the program storage devices may include magnetic media, such as a diskette, disk, memory stick or computer hard drive, which is readable and executable by a computer. In other alternate embodiments, the program storage devices could include optical disks, read-only-memory ("ROM") floppy disks and semiconductor materials and chips.

The systems and devices shown in Figs. 1, 2 and 4 may also include one or more processors or processor devices for executing stored programs, and may include a data storage or memory device on its program storage device for the storage of information and data. The computer program or software incorporating the processes and method steps incorporating aspects of the disclosed embodiments may be stored in one or more computer systems or on an otherwise conventional program storage device. For example, in one embodiment, the devices and systems shown in Figs. 1, 2 and 4, can include one or more controllers that are comprised of, or include, machine-readable instructions that are executable by a processing device.

The method and the system of the present disclosure can be used for various purposes, including, though not limited to, plain device discovery, facilitating multiplayer online gaming between users of different communication devices operating through different incompatible operating systems which are generally incompatible, or to exchange data or enable short range communication between such devices.

Although embodiments of the current disclosure have been described comprehensively, in considerable detail to cover the possible aspects, those skilled in the art would recognize that other versions of the invention are also possible.

## Claims

1. A method of enabling cross-platform connectivity and operable communication between a first and a second portable communication device, the two devices being spatially located in proximity to each other, and being configured to operate through different operating systems, the method comprising:
operably connecting the first device to a service infrastructure, the service infrastructure being configured to enable detection of communication devices within a communication network, and communicating at least one unique identifier of the first device to the service infrastructure;
activating operable communication of the second device with the service infrastructure;
detecting the presence of a communication device by the second device, through the service infrastructure, and sending identifying information pertaining to the communication device to the service infrastructure, the service infrastructure being configured to confirm whether or not the identifying information is stored therein; and
delivering a notification to the first device, based on the confirmation.

2. The method of claim 1, wherein the unique identifier is an identifier assigned to a network interface controller of the first device through which the first device communicates on physical network segments.

3. A method of claim 2, wherein the unique identifier is the Media Access Control (MAC) address of the first device.

4. The method of any preceding claim, further comprising, using a notification service compatible with the operating system of first device, to deliver the notification to the first device.

5. The method of any preceding claim, wherein the method is configured to enable cross-platform connectivity and operable communication between more than two portable communication devices operating through different operating systems, and lying spatially proximal to each other.

6. The method of any preceding claim, further comprising identifying information separately, pertaining to the different portable communication devices detected by the second device, and delivering corresponding notifications to the different devices, if the unique identifiers corresponding to the different devices are stored in the service infrastructure.

7. A method of any preceding claim, further comprising using information corresponding to a communication network through which the first device is communicating, to retrieve the unique identifier.

8. A method of any preceding claim, wherein the information pertaining to the detected communication device includes one or more of a media access control address, a location identifier, or a received signal strength indicator (RSSI) value corresponding to the detected communication device.

9. A method of any preceding claim, wherein the confirming, by the service infrastructure, whether or not the identifying information is stored therein, further comprises, matching the identifying information sequentially with a set of pre-stored identifiers within a database of the service infrastructure, and delivering the notification to the first device, if the identifying information of the detected device matches with the unique identifier.

10. A method of any preceding claim, further comprising, using a search crawler, to match the identifying information with the pre-stored identifiers, wherein each of the pre-stored identifiers corresponds to a portable communication device lying spatially proximal to the second device.

11. A method of any preceding claim, further comprising delivering a confirmation message to the first device, to connect operably with the second device, and enabling communication between the two devices, based on a confirmation received from the user of the first device.

12. A system for enabling cross-platform connectivity and operable communication between different portable communication devices operating through mutually different operating systems and lying in proximity to each other, the system comprising:
a first portable communication device operably connected to a service infrastructure, the device having an application installed therein to retrieve a unique identifier thereof and to deliver the unique identifier to the service infrastructure, the service infrastructure being configured to store the unique identifier;
a second portable communication device in operable communication with the service infrastructure, the second device being configured to detect communication devices within its proximity, and to deliver identifying information corresponding to any detected communication devices to the service infrastructure, wherein:
the service infrastructure is configured to confirm whether the delivered information corresponds to the unique identifier, and to deliver a notification to the first device, based on the confirmation.

13. The system of claim 12, wherein the first device includes a network interface controller through which it communicates with physical network segments, and the unique identifier is an identifier assigned to the network interface controller.

14. The system of claims 12 and 13, wherein the unique identifier is the Media Access Control (MAC) address of the first device.

15. The system of any of claims 12-14, wherein any of the first device or the second device is a smart phone, including an iPhone®, an Android phone® or a Symbian phone®.
